# EUROPÄISCHE PATENTSCHRIFT

(11) **EP 1 129 000 B1**
(45) Veröffentlichungstag und Bekanntmachung des Hinweises auf die Patenterteilung: **04.08.2004**
(21) Anmeldenummer: 99934454.2
(22) Anmeldetag: 08.05.1999
(51) Int. Cl.: B60T 8/00

(54) **VERFAHREN UND VORRICHTUNG ZUR SICHERSTELLUNG DES STILLSTANDES EINES FAHRZEUGS**
METHOD AND DEVICE FOR SECURING THE STANDSTILL OF A VEHICLE, NOTABLY IN CONJUNCTION WITH A VEHICLE SPEED CONTROL
PROCEDE ET DISPOSITIF PERMETTANT DE GARANTIR L'ARRET D'UN VEHICULE, NOTAMMENT EN LIAISON AVEC UNE COMMANDE DE LA VITESSE DU VEHICULE

(30) Priorität: 27.08.1998 DE 19838885
(43) Veröffentlichungstag der Anmeldung: 05.09.2001
(73) Patentinhaber: ROBERT BOSCH GMBH, 70442 Stuttgart (DE)
(72) Erfinder: WINNER, Hermann, D-76229 Karlsruhe (DE); IRION, Albrecht, D-70563 Stuttgart (DE)
(86) Internationale Anmeldenummer: PCT/DE1999/001389
(87) Internationale Veröffentlichungsnummer: WO 2000/012365

(56) Entgegenhaltungen:
- DE-A- 4 338 399
- US-A- 3 036 677
- US-A- 4 684 177
- US-A- 5 135 291

## Beschreibung

### Stand der Technik

Die Erfindung betrifft ein Verfahren und eine Vorrichtung zur Sicherstellung des Stillstandes eines Fahrzeugs, insbesondere in Verbindung mit einer Steuerung der Geschwindigkeit des Fahrzeugs.

Ein Verfahren und eine Vorrichtung zur Sicherstellung des Stillstandes eines Fahrzeugs ist beispielsweise aus der EP 375 708 B1 (US-Patent 5 129 496) bekannt. Dort wird auf der Basis der Radgeschwindigkeitssignale der Stillstand des Fahrzeugs abgeleitet, worauf Bremskraft an wenigstens einer Radbremse im Sinne einer Feststellbremsfunktion aufgebaut wird. Diese Feststellbremsfunktion wird allerdings abgeschaltet, wenn der Fahrer die Spannungsversorgung für die Fahrzeugsteuersysteme abschaltet. Eine Sicherstellung des Stillstandes ist also nur bei eingeschalteter Versorgungsspannung gewährleistet.

Das Dokument US-A-5 135 291 zeigt eine Vorrichtung zur Sicherstellung des Stillstandes eines Fahrzeuges, mit Stillstanderkennungs mitteln, die einen Stillstand des Fahrzeuges erkennen, mit Bremskraft steuer mitteln, welche bei erhanntem Stillstand Bremskraft im sinne einer Feststellbremse aufbauen und bei erkannten Anfahrwunsch des Fahrers die Bremskraft wieder abbanen.

Es ist Aufgabe der Erfindung, Maßnahmen anzugeben, die den Stillstand eines Fahrzeuges auf jeden Fall sicherstellen.

Das SAE-Paper Nr. 96 10 10 (Adaptive Cruise Control, System Aspects and Development Trends, 1996, von Hermann Winner, Stefan Witte, Werner Uhler und Bernd Lichtenberg) zeigt eine Geschwindigkeitssteuerung unter Berücksichtigung des Abstandes zu vorausfahrenden Fahrzeugen. Dabei gibt der Fahrer über einen Bedienhebel mit den bei Fahrgeschwindigkeitsreglern üblichen Funktionen die Sollgeschwindigkeit des Fahrzeugs vor, die bei nicht vorhandenem Frontfahrzeug vergleichbar zu einem herkömmlichen Fahrgeschwindigkeitsregler eingeregelt wird. Dabei wird aus der Differenz zwischen Sollgeschwindigkeit und Fahrgeschwindigkeit eine Sollbeschleunigung berechnet, die zur Steuerung der Antriebseinheit des Fahrzeugs bereitgestellt wird. Erkennt ein Radarsystem ein vorausfahrendes Fahrzeug, werden Abstand und Relativgeschwindigkeit zu diesem Fahrzeug ermittelt. Die Regelaufgabe besteht darin, die Relativgeschwindigkeit auf Null einzuregeln und dabei gleichzeitig einen geschwindigkeitsabhängigen Sollabstand einzuhalten. Parameter zur Bestimmung des Sollabstandes sind vom Fahrer einstellbar. Dieser sogenannte Folgeregler bestimmt aus den genannten Größen ebenfalls eine Sollbeschleunigung. Die Sollbeschleunigungswerte können dabei auch negativ sein, so daß sie Verzögerungssollwerten entsprechen. Diese werden durch Beeinflussung des Motors des Fahrzeugs und/oder der Bremsen eingestellt.

Entsprechend zeigt die DE-A 43 38 399 einen Fahrgeschwindigkeitsregler, der auf der Basis der Differenz zwischen Sollund Istgeschwindigkeit eine Sollbeschleunigung des Fahrzeugs vorgibt. Diese wird durch Steuerung des Motors und/oder durch Betätigen der Radbremsen des Fahrzeugs eingestellt.

Bei derartigen Fahrgeschwindigkeitsregelsystemen kann es vorkommen, daß das Fahrzeug bis zum Stillstand gebremst wird. Auch hier ist es notwendig, eine Sicherung dieses Stillstandes bereitzustellen. Aus der deutschen Patentanmeldung 197 03 688 ist eine Vorgehensweise bekannt, mit deren Hilfe ein komfortables gebremstes Anhalten des Fahrzeugs ermöglicht wird. Dabei wird bei Unterschreiten einer bestimmten Fahrgeschwindigkeit im Bereich der Stillstandsgeschwindigkeit Bremskraft an den Rädern etwas abgebaut, um den Anhalteruck zu verringern.

### Vorteile der Erfindung

Die erfindungsgemäße Lösung geht aus den Ansprüchen 1 und 5 hervor.

### Zeichnung

Die Erfindung wird nachstehend anhand der in der Zeichnung dargestellten Ausführungsformen näher erläutert. Dabei zeigt Figur 1 ein Übersichtsschaltbild einer Steuereinheit zur Steuerung der Geschwindigkeit eines Fahrzeugs, die in Figur 2 am Beispiel eines adaptiven Fahrgeschwindigkeitsreglers näher ausgeführt ist. Figur 3 zeigt die erfindungsgemäße Lösung anhand eines Flußdiagramms, welches ein in einem Mikrocomputer der Steuereinheit ablaufendes Programm skizziert. Figur 4 schließlich zeigt Zeitdiagramme, anhand derer eine bevorzugte Realisierung der erfindungsgemäßen Lösung dargestellt ist. Neben der Anwendung im bevorzugten Ausführungsbeispiel bei einem adaptiven Fahrgeschwindigkeitsregler wird die dargestellte Lösung auch in allen Anwendungsfällen eingesetzt, in denen das Fahrzeug in den Stillstand geführt wird, beispielsweise auf der Basis einer Bremspedalbetätigung des Fahrers, eines anderen automatischen Bremsvorgangs, etc.

### Beschreibung von Ausführungsbeispielen

Die erfindungsgemäße Lösung wird nachstehend anhand des bevorzugten Anwendungsfalls eines adaptiven Fahrgeschwindigkeitsreglers dargestellt, ohne daß dieses Ausführungsbeispiel wie oben erwähnt das Anwendungsgebiet der beschriebenen Lösung einschränkt.

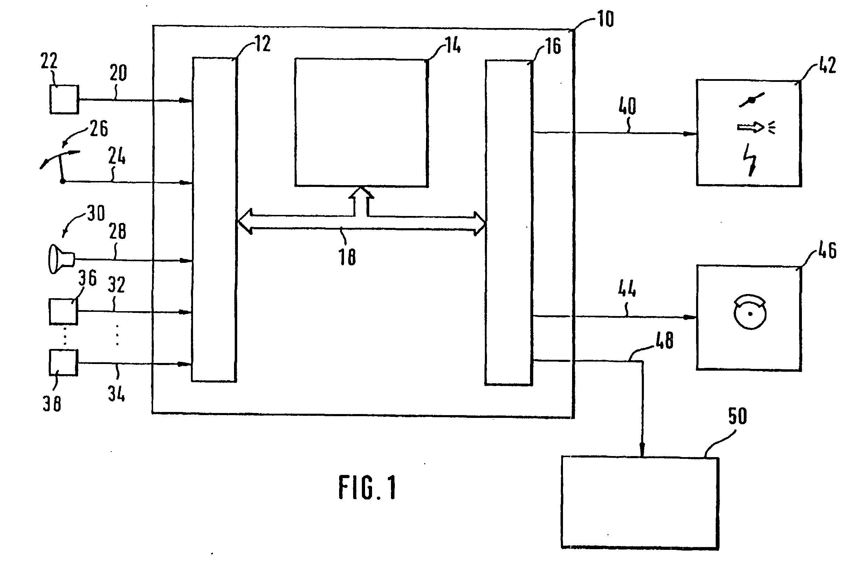

Figur 1 zeigt ein Übersichtsschaltbild einer Steuereinheit 10 für einen adaptiven Fahrgeschwindigkeitsregler. Die Steuereinheit 10 umfaßt dabei eine Eingangsschaltung 12, wenigstens einen Mikrocomputer 14 und einen Ausgangsschaltung 16. Diese Elemente sind über ein Kommunikationssystem 18 zum Daten- und Informationsaustausch miteinander verbunden. Der Eingangsschaltung 12 sind Eingangsleitungen 20 von einer Meßeinrichtung 22 zur Erfassung der Fahrgeschwindigkeit, eine Eingangsleitung 24 von einem vom Fahrer betätigbaren Bedienelement 26 zur Vorgabe des Betriebszustandes des Fahrgeschwindigkeitsreglers und des Sollabstandes, und eine Ausgangsleitung 28 von einer Abstandsmeßeinrichtung 30, vorzugsweise einem Radargerät zugeführt. Ferner werden der Eingangsschaltung 12 weitere Eingangsleitungen 32 bis 34 von Meßeinrichtungen 36 bis 38 zur Erfassung weiterer Betriebsgrößen des Fahrzeugs, die bei der adaptiven Fahrgeschwindigkeitsregelung Verwendung finden, zugeführt. Derartige Betriebsgrößen sind beispielsweise Lenkwinkel, Querbeschleunigung, etc. Die Steuereinheit 10, dort der wenigstens eine Mikrocomputer 14 beeinflußt im Rahmen der adaptiven Fahrgeschwindigkeitsregelung über wenigstens eine Ausgangsleitung 40 und entsprechende Stelleinrichtungen 42 (z. B. elektronisches Motorsteuergerät) die Leistung der Antriebseinheit des Fahrzeugs. Ferner beeinflußt die Steuereinheit 10 in einem bevorzugten Ausführungsbeispiel über die Ausgangsleitung 44 und entsprechende Stellelemente 46 (z. B. einer Bremsanlage mit ABS/ASR-Elementen) die Bremskraft an den Radbremsen des Fahrzeugs. Über eine Ausgangsleitung 48 wird in einem vorteilhaften Ausführungsbeispiel eine Steuereinheit 50 zur Steuerung eines automatischen Getriebes und/oder einer elektrisch steuerbaren Kupplung angesteuert.

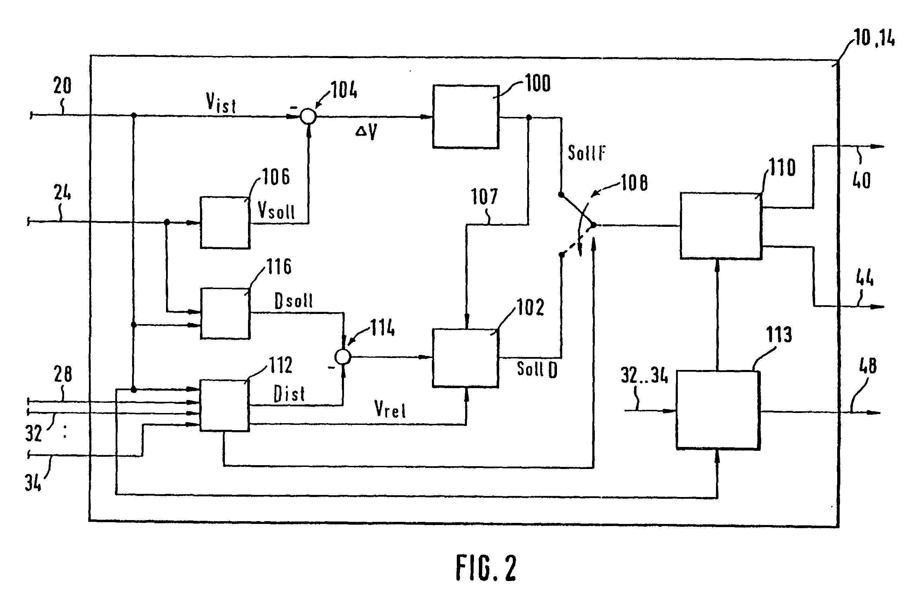

Das aus dem eingangs genannten Stand der Technik bekannte Grundprinzip der adaptiven Fahrgeschwindigkeitsregelung ist in Figur 2 anhand eines Ablaufdiagramms dargelegt, welches die grundsätzlichen Zusammenhänge bei der adaptiven Fahrgeschwindigkeitsregelung darstellt. Die Realisierung der Fahrgeschwindigkeitsregelung erfolgt im bevorzugten Ausführungsbeispiel als ein Programm des Mikrocomputers 14, durch welche die in Figur 2 dargestellten Zusammenhänge realisiert werden.

Der dargestellte adaptive Fahrgeschwindigkeitsregler weist zwei Grundfunktionen auf, den Fahrgeschwindigkeitsregler 100 und den Abstandsregler 102. Dem in herkömmlicher Weise realisierten Fahrgeschwindigkeitsregler 100 wird von einer Vergleichsstelle 104 die Differenz ΔV zwischen der Sollgeschwindigkeit Vₛₒₗₗ und der Istgeschwindigkeit Vᵢₛₜ zugeführt. Die Sollgeschwindigkeit Vₛₒₗₗ wird dabei abhängig von dem Betätigungszustand des Bedienelements 21 in einer Auswahlstufe 106 bestimmt. So wird beispielsweise im Betriebszustand Setzen der aktuelle Istgeschwindigkeitswert als Sollgeschwindigkeit übernommen, im Betriebszustand Beschleunigen zeitlich veränderliche Rampen der Sollgeschwindigkeit vorgegeben, etc. Das vom Fahrgeschwindigkeitsregler 100 in Abhängigkeit der Geschwindigkeitsdifferenz nach Maßgabe einer vorgegebenen Regelstrategie (z.B. PD-Regelung) gebildete Ausgangssignal SollF wird an ein Schaltelement 108 und über die Leitung 107 an den Regler 102 abgegeben. Dieses leitet je nach Schaltstellung das Ausgangssignal SollF des Fahrgeschwindigkeitsreglers oder das Ausgangssignal SollD des Abstandsreglers an eine Auswahlstufe 110. Diese bildet abhängig vom zugeführten Ausgangssignal ein Steuersignal zur Beeinflussung der Motorleistung (Ausgangsleitung 40) oder der Bremskraft (Ausgangsleitung 44). Die Abstandsregelung umfaßt eine Auswahlstufe 112, die in Abhängigkeit des über die Eingangsleitung 28 zugeführten Radarsignale, der Istgeschwindigkeit und weiter über die Leitung 32 bis 34 zugeführte Größen, wie z. B. Lenkwinkel, Gierrate, Beschleunigung des Fahrzeugs das relevante Fahrzeug, welches als Frontfahrzeug zur Abstandsregelung zu verwenden ist, ermittelt. Dabei wird der zu erwartende Kurs des Fahrzeugs anhand der Geschwindigkeit und des Lenkwinkels und/oder der Gierrate bestimmt. Der Radarsensor liefert den Abstand zu den erfaßten Objekte, deren relative Geschwindigkeit und den Winkel zu den verschiedenen Objekten, so daß aus einem Vergleich der gelieferten Daten mit dem zu erwartenden zukünftigen Kurs des Fahrzeugs das relevante Fahrzeug ausgewählt wird. Dann werden die vom Radarsensor ermittelten Werte für den Abstand zum relevanten Fahrzeug Dᵢₛₜ und dessen Relativgeschwindigkeit Vᵣₑₗ ausgegeben. Der Istabstand wird dabei einer Vergleichsstufe 114 zugeführt, in der die Differenz zwischen dem vom Fahrer vorgegebenen Sollabstand Dₛₒₗₗ und dem ermittelten Istabstand gebildet und dem Abstandsregler 102 zugeführt wird. Diesem wird ferner von der Auswahlstufe 112 die Relativgeschwindigkeit übermittelt. Der Sollabstand zum relevanten vorausfahrenden Fahrzeug wird in einer Auswahlstufe 116 in Abhängigkeit eines Betätigungssignals des Fahrers, welche den Sollzeitabstand zum vorausfahrenden Fahrzeug in Sekunden festlegt, und der Istgeschwindigkeit ermittelt. Der Abstandsregler 102 bildet ein Ausgangssignal SollD, mit welchem sowohl die Abstandsdifferenz als auch die relative Geschwindigkeit des vorausfahrenden Fahrzeugs gegen 0 geführt wird. Das Ausgangssignal SollD wird dem Schaltelement 108 zugeführt. Dieses wird in die strichliert gezeichnete Stellung umgeschaltet, wenn ein vorausfahrendes Fahrzeug erkannt wurde, zu dem der Abstand einzustellen ist. Dies bedeutet, daß der Fahrgeschwindigkeitsregler 100 gemäß seinen Eingangsgrößen Motorleistung und Bremsleistung bestimmt, wenn kein Fahrzeug zur Abstandsregelung ermittelt wurde, während bei erkanntem vorausfahrendem Fahrzeug der Abstandsregler 102 Motorleistung und Bremsleistung steuert. Die Auswahlstufe 110 entscheidet abhängig vom zugeführten Sollwert, der im wesentlichen einer Sollbeschleunigung bzw. Verzögerung entspricht, ob die Motorsteuerung oder die Bremsensteuerung aktiviert wird. Reicht eine Reduktion der Motorleistung zum Einhalten der Sollverzögerung nicht aus, so werden die Bremsen aktiviert, andernfalls wird die Verzögerungssteuerung über eine Steuerung der Motorleistung durchgeführt.

Zur Verbesserung des Fahrernutzens ist es wünschenswert, daß ein derartiger Fahrgeschwindigkeitsregler das Fahrzeug bis zum Stillstand abbremsen kann. Daher ist gemäß Figur 2 eine Stillstandserkennung 113 vorgesehen, welche wenigstens auf der Basis des Fahrgeschwindigkeit-Istsignals VIST den Stillstand des Fahrzeugs sowie einen Betriebszustand ermittelt, der unmittelbar vor dem Stillstand des Fahrzeugs liegt. Stellt die Stillstandserkennung 113 beispielsweise durch Unterschreiten eines vorgegebenen Geschwindigkeitsgrenzwertes fest, daß sich das Fahrzeug im Bereich des Stillstandes befindet, wird an die Auswahlstufe 110 eine entsprechende Information abgegeben. In diesem Fall wird die Bremsanlage über die Ausgangsleitung 44 z.B. wie aus dem eingangs genannten Stand der Technik zur Beherrschung des Anhaltebremsvorgangs gesteuert. Erkennt die Stillstandserkennung 113 beispielsweise auf der Basis einer extrapolierten Geschwindigkeit den Stillstand des Fahrzeugs, wird wieder eine entsprechende Information an die Auswahlstufe 110 abgegeben, die dazu führt, daß über die Leitung 44 die Bremskraft an den Radbremsen im Sinne einer Feststellbremsfunktion aufgebaut wird. In einem bevorzugten Ausführungsbeispiel wird diese Feststellbremsfunktion mittels eines auf wenigstens eine Radbremse wirkenden elektromotorischen Stellers realisiert, der Reibbeläge zum Bremsen am Fahrzeugs in Kontakt bringt und der bei Beendigung der Ansteuerung in der dann eingenommen Position verbleibt, d.h. verriegelt wird, und erst durch ein erneutes, lösendes Ansteuersignal wieder in seine Ausgangsposition geführt wird. In einem anderen Ausführungsbeispiel wird auf hydraulischer oder pneumatischer Basis wenigstens eine Radbremse im Sinne einer Feststellbremsfunktion betätigt, bei der das eingesteuerte Druckmittel eingesperrt, die Bremswirkung aufrechterhalten bleibt und erst bei einem lösendem Ansteuersignal gelöst wird. In einem weiteren Lösung wird die Feststellbremse über einen Seilzug betätigt, wobei das Bremselement durch eine Rüchstelleinrichtung in die Feststellbremsposition, in der Reibbeläge zum Bremsen in Kontakt sind, vorgespannt ist. Aus dieser Position wird die Feststellbremse elektrisch, mechanisch, hydraulisch oder pneumatisch gelöst, wobei bei Abschalten dieser Betätigung die Feststellbremse automatisch durch die Rückstellvorrichtung zugespannt wird.

Zusätzlich oder alternativ zum Bremskraftaufbau im Sinne einer Feststellbremse wird bei erkanntem Stillstand des Fahrzeugs über die Leitung 48 eine entsprechende Information zur Getriebesteuerung abgegeben, welche ein Schalten des Getriebes in Neutralposition oder in Parkposition auslöst. Das Schalten des Getriebes erfolgt in einem bevorzugten Ausführungsbeispiel nach einer bestimmten Zeit nach Erkennen des Stillstands des Fahrzeugs. Der Stillstandserkennung 113 wird ferner über wenigstens eine der Leitungen 32 bis 34 ein Signal zugeführt, welches einen Anfahrwunsch des Fahrers repräsentiert. Ein derartiges Signal kann beispielsweise ein Stellungssignal eines Fahrpedals, ein Ausgangssignal eines Schalters, beispielsweise eines Fahrgeschwindigkeitsreglerschalters oder eines Schalters des adaptiven Fahrgeschwindigkeitsreglers sein. Erkennt die Stillstandserkennung 113 einen entsprechenden Anfahrwunsch des Fahrers, wird eine entsprechende Information an die Auswahlstufe 110 bzw. an die Getriebesteuerung abgegeben, welche die Feststellbremse bzw. die Parkposition des Getriebes zur Stillstandssicherung wieder löst. Wesentlich hierbei ist, daß auch nach Abfall der Versorgungsspannung für die Steuereinheiten ("Fahrtschalter aus") die Feststellbremse und/oder die Parkposition des Getriebes arretiert bleibt, so daß sichergestellt ist, daß kein unabsichtliches Lösen der den Stillstand des Fahrzeugs sicherstellenden Funktion erfolgt.

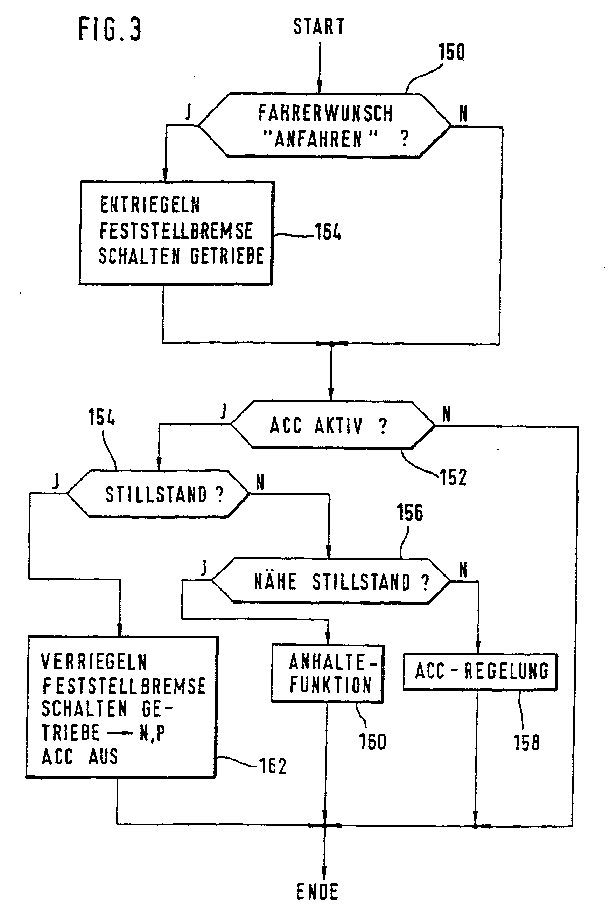

Im bevorzugten Ausführungsbeispiel ist die dargestellte erfindungsgemäße Lösung als Programm eines Mikrocomputers realisiert. Ein Beispiel für ein solches Programm ist anhand des Flußdiagramms nach Figur 3 dargestellt. Dieses Programm wird bei eingeschalteter Versorgungsspannung in vorgegebenen Zeitabständen durchlaufen.

Im ersten Schritt 150 wird überprüft, ob ein Fahrerwunsch zum Anfahren des Fahrzeugs vorliegt. Im bevorzugten Ausführungsbeispiel wird dieser Anfahrwunsch auf der Basis eines die Stellung eines Fahrpedals repräsentierenden Größe bestimmt, wenn das Fahrpedal vom losgelassenen Zustand in einen betätigten Zustand ausgelenkt wird. Daneben können Schaltersignale vorgesehen sein, die einen Anfahrwunsch signalisieren, beispielsweise Schaltelemente, die einen adaptiven oder einen herkömmlichen Fahrgeschwindigkeitsregler aktivieren. Die Berücksichtigung von Kupplungs- und Getriebehebelstellungssignale ist in einigen Ausführungsbeispiel ebenfalls vorteilhaft. Liegt kein derartiger Anfahrwunsch vor, wird im Schritt 152 überprüft, ob der adaptive Fahrgeschwindigkeitsregler ACC aktiv ist. Ist dies nicht der Fall, wird das Programm nach Figur 3 beendet und zu gegebener Zeit erneut durchlaufen. Hat Schritt 152 ergeben, daß der adaptive Fahrgeschwindigkeitsregler aktiv ist, wird in Schritt 154 überprüft, ob das Fahrzeug stillsteht. Dies wird wie aus dem Stand der Technik bekannt auf der Basis einer Extrapolation des Geschwindigkeitsverlaufes durchgeführt. Ist dies nicht der Fall, wird gemäß Schritt 156 überprüft, ob die Fahrgeschwindigkeit einen bestimmten Grenzwert unterschritten hat, d.h. ob das Fahrzeug sich auf dem Wege in den Stillstand befindet. Ist dies nicht der Fall, wird gemäß Schritt 158 die eingangs beschriebene Regelung im Rahmen des adaptiven Fahrgeschwindigkeitreglers (ACC) durchgeführt, andernfalls eine Anhaltefunktion wie im Stand der Technik beschrieben eingeleitet. Hat Schritt 154 ergeben, daß das Fahrzeug stillsteht, wird gemäß Schritt 162 Bremskraft an wenigstens einer Radbremse aufgebaut zur Bereitstellung einer Feststellbremsfunktion oder eine elektrisch steuerbare Feststellbremse betätigt und ggf. nach einer vorbestimmten Zeit das Getriebe in Neutralposition geschaltet. Anstelle der Neutralposition oder in einem vorteilhaften Ausführungsbeispiel wird das Getriebe bei erkanntem Stillstand in die Parkposition geschaltet. Ferner wird der adaptive Fahrgeschwindigkeitsregler abgeschaltet. Nach den Schritten 162, 160 oder 158 wird der Programmteil beendet und zu gegebener Zeit wiederholt. Hat Schritt 150 ergeben, daß ein Anfahrwunsch vorliegt, wird gemäß Schritt 164 die Feststellbremse gelöst und/oder die Park- bzw. Neutralposition des Getriebes aufgehoben. Danach wird mit Schritt 152 fortgefahren.

Wird nach Schritt 162 die Versorgungsspannung für die Steuereinheit abgeschaltet, bleibt die Feststellbremse und/oder die Parkposition des Getriebes arretiert, bis nach Wiedereinschalten der Versorgungsspannung ein Anfahrwunsch des Fahrers gemäß Schritt 150 erkannt wurde. Somit wird eine Sicherstellung des Stillstandes gewährleistet, die nicht zu einem unbeabsichtigten Lösen von Feststellbremse und/oder ' der Parkposition des Getriebes führt.

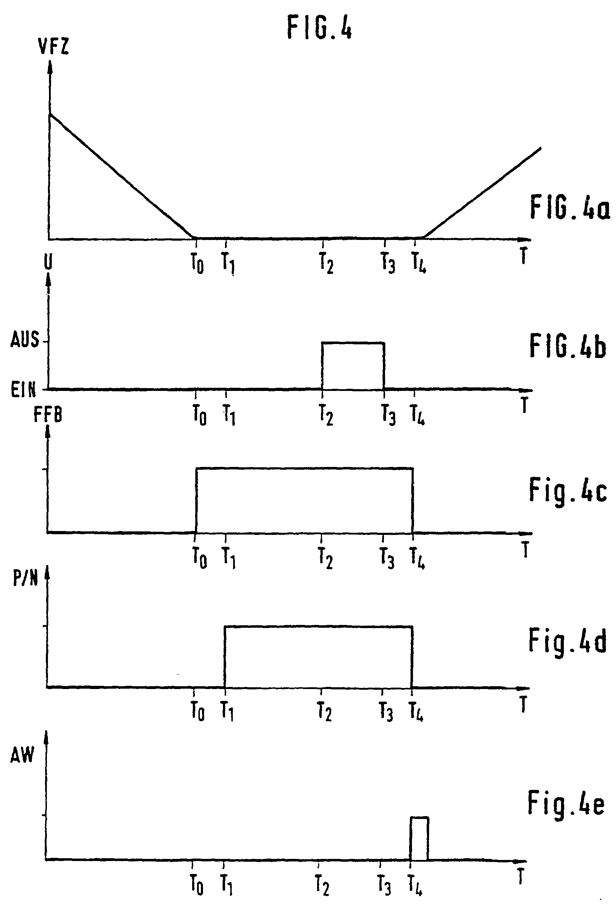

Die anhand Figur 3 beschriebene Wirkungsweise ist weiter auf der Basis der Zeitdiagramme nach Figur 4 verdeutlicht. Dabei zeigt Figur 4a den Zeitverlauf der Fahrgeschwindigkeit VFZ, Figur 4b den der Versorgungsspannung U, Figur 4c den zeitlichen Verlauf der Feststellbremskraft FFB, Figur 4b zeigt ein Signal, welches den Getriebezustand repräsentiert, insbesondere ob Park- oder Neutralposition eingenommen ist, während Figur 4e ein zweiwertiges Signal zeigt, welches das Vorliegen eines Anfahrwunsches AW repräsentiert.

Es wird von einer Betriebssituation ausgegangen, in der das Fahrzeug bis zum Stillstand gebremst wird. Dies kann entweder durch einen Fahrgeschwindigkeitsregler wie am bevorzugten Ausführungsbeispiel beschrieben oder durch entsprechende Bremspedalbetätigung des Fahrers erfolgen. Zum Zeitpunkt T0 sei die Fahrgeschwindigkeit (vgl. Figur 4a) soweit abgesunken, daß der Stillstand des Fahrzeugs erkannt wird. Zum Zeitpunkt T0 wird also eine Feststellbremskraft gemäß Figur 4c aufgebaut. In einem Ausführungsbeispiel wird dann nach Ablauf einer bestimmten Zeit wird zum Zeitpunkt T1 gemäß Figur 4d das Getriebe in Neutralstellung oder Parkposition geschaltet. In einem anderen Ausführungsbeispiel wird die Parkposition des Getriebes sofort zum Zeitpunkt T0 eingenommen, oder die Parkposition zum Zeitpunkt T0 anstelle des Feststellbremskraftaufbaus geschaltet. Zum Zeitpunkt T2 wird die Versorgungsspannung U der Steuereinheit abgeschaltet (vgl. Figur 4b). Feststellbremskraft und Getriebezustand bleiben erhalten (vgl. Figur 4c, Figur 4d). Zum Zeitpunkt T3 wird die Versorgungsspannung wieder eingeschaltet. Ein Anfahrwunsch wird zum Zeitpunkt T4 erkannt, so daß der Getriebezustand verlassen und/oder die Feststellbremskraft abgebaut wird. Die Feststellbremskraft sinkt auf Null, der Getriebezustand verläßt die Park- oder Neutralposition. Gemäß Figur 4a nimmt das Fahrzeug Geschwindigkeit auf und fährt los.

## Patentansprüche

1. Verfahren zur Sicherstellung des Stillstands eines Fahrzeugs in Verbindung mit einer Geschwindigkeitsregelung des Fahrzeugs; wobei ein Geschwindigkeitsregler (10, 14) das Fahrzeug bis in den Stillstand abbremst, wobei bei erkanntem Stillstand des Fahrzeugs Bremskraft im Sinne einer Feststellbremsfunktion aufgebaut und/oder gehalten wird, welche bei .einem Anfahrwunsch des Fahrers wieder abgebaut wird, **dadurch gekennzeichnet, dass** ferner der Kraftfluss im Antriebsstrang unterbrochen wird, indem ein automatisches Getriebe in Neutralstellung oder Parkstellung gesteuert wird.

2. Verfahren nach Anspruch 1, **dadurch gekennzeichnet, dass** die Feststellbremskraft aufrechterhalten bleibt, auch wenn die Versorgungsspannung für die elektrischen Systeme des Fahrzeugs abgeschaltet ist.

3. Verfahren nach Anspruch 1, **dadurch gekennzeichnet, dass** die Neutralstellung oder die Parkstellung des Getriebes aufrechterhalten bleibt, wenn die Versorgungsspannung für die elektrischen Systeme des Fahrzeugs abgeschaltet wird und die Stellung des Getriebes erst dann verlassen wird, wenn ein Anfahrwunsch des Fahrers erkannt wird.

4. Verfahren nach Anspruch 1, **dadurch gekennzeichnet, dass** die Unterbrechung des Kraftflusses nach Ablauf einer vorbestimmten Zeit nach Erkennen des Stillstandes erfolgt.

5. Vorrichtung zur Sicherstellung des Stillstandes eines Fahrzeugs, mit einem Geschwindigkeitsregler (10, 14), welcher das Fahrzeug bis in den Stillstand abbremst, welcher Stillstandserkennungsmittel (113) umfasst, die einen Stillstand des Fahrzeugs erkennen, mit Bremskraftsteuermittel (44), die bei erkanntem Stillstand Bremskraft im Sinne einer Feststellbremse aufbauen und/oder halten und welche bei erkanntem Anfahrwunsch des Fahrers die Bremskraft wieder abbauen, **dadurch gekennzeichnet, dass** Getriebesteuermittel (48) vorgesehen sind, die zur Sicherstellung des Stillstandes ein automatisches Getriebe unter Unterbrechung des Kraftflusses im Antriebsstrang in Neutralstellung oder Parkstellung steuern.

## Claims

1. Method for ensuring a vehicle comes to a standstill in conjunction with a speed coritrol of the vehicle, a speed controller (10, 14) braking the vehicle to a standstill, a braking force being built up in the sense of a parking brake function and/or maintained when it is detected that the vehicle is at a standstill and being reduced again when there is a request by the driver to drive, **characterized in that** in addition the force flux in the drive train is interrupted by placing an automatic gearbox in the neutral position or parked position.

2. Method according to Claim 1, **characterized in that** the parking brake force continues to be maintained even if the supply voltage for the electrical systems of the vehicle is switched off.

3. Method according to Claim 1, **characterized in that** the neutral position or the parked position of the gearbox needs to be maintained if the supply voltage for the electrical systems of the vehicle is switched off and the position of the gearbox is not exited until a request by the driver to drive is detected.

4. Method according to Claim 1, **characterized in that** the interruption of the force flux takes place after a predetermined time after the detection of the stationary state has expired.

5. Device for ensuring that a vehicle comes to a standstill, having a speed controller (10, 14) which brakes the vehicle to a standstill and which comprises standstill detection means (113) which detect when the vehicle is at a standstill, having braking force control means (44), which, when a standstill is detected, build up a braking force in the sense of a parking brake and/or maintain it and which reduce it again when a request by the driver to drive is detected, **characterized in that** gearbox control means (48) are provided which place an automatic gearbox in the neutral position or parked position while the force flux in the drive train is interrupted, in order to ensure the stationary state.

## Revendications

1. Procédé pour garantir l'arrêt d'un véhicule en liaison avec une régulation de vitesse du véhicule selon lequel
un régulateur de vitesse (10, 14) freine le véhicule jusqu'à l'arrêt,
lorsque l'arrêt du véhicule est constaté, il établit une force de freinage dans le sens d'une fonction de freinage de blocage et il maintient cette fonction ou supprime de nouveau cette fonction lorsqu'arrive une demande du conducteur,
**caractérisé en ce qu'**
en outre on interrompt le flux des forces dans la ligne de transmission en commandant la transmission automatique en position neutre ou en position de parking.

2. Procédé selon la revendication 1, ,
**caractérisé en ce qu'**
on maintient la force de freinage de blocage même si la tension d'alimentation du système électrique du véhicule est coupé.

3. Procédé selon la revendication 1,
**caractérisé en ce qu'**
on maintient la position neutre ou la position de parking de la transmission si la tension d'alimentation des systèmes électriques du véhicule est coupée et on ne quitte la position de la transmission que si l'on constate une demande de démarrage du conducteur.

4. Procédé selon la revendication 1,
**caractérisé en ce que**
le flux des forces est coupé à la fin d'une durée prédéterminée, après détection de l'état d'arrêt.

5. Dispositif pour garantir l'état d'arrêt d'un véhicule comprenant un régulateur de vitesse (10, 14) qui freine le véhicule jusqu'à son arrêt, comprenant un moyen de détection de l'état d'arrêt (113) détectant l'état d'arrêt du véhicule, un moyen de commande de force de freinage (44) qui, lorsque l'état d'arrêt est détecté, établit la force de freinage dans le sens d'un frein de blocage et conserve cette force de freinage ou la supprime de nouveau lorsqu' arrive une demande du conducteur,
**caractérisé par**
des moyens de commande de transmission (48) commandant de façon garantie l'état d'arrêt d'une transmission automatique par coupure du flux des forces dans la ligne de transmission en commandant la position neutre ou la position de parking.
